# FASCICULE DE BREVET EUROPEEN

(11) **EP 1 833 768 B1**
(45) Date de publication et mention de la délivrance du brevet: **13.06.2012**
(21) Numéro de dépôt: 05823848.6
(22) Date de dépôt: 19.12.2005
(51) Int. Cl.: C03C 17/36

(54) **FEUILLE DE VERRE PORTANT UN EMPILAGE MULTI-COUCHES**
MEHRFACHBESCHICHTETE GLASSCHEIBE
GLAZING PANEL WITH A MULTILAYER COATING

(30) Priorité: 21.12.2004 EP 04106818
(43) Date de publication de la demande: 19.09.2007
(73) Titulaire: AGC Glass Europe, 1170 Bruxelles (Watermael-Boitsfort) (BE)
(72) Inventeur: DECROUPET, Daniel, GLAVERBEL Centre R & D, B-6040 Jumet (BE); DEPAUW, Jean-Michel, GLAVERBEL Centre R & D, B-6040 Jumet (BE)
(74) Mandataire: Verbrugge, Vivien François Emeric
(86) Numéro de dépôt international: PCT/EP2005/056894
(87) Numéro de publication internationale: WO 2006/067102

(56) Documents cités:
- EP-A- 0 275 474
- EP-A- 0 363 747
- EP-A- 0 803 481
- EP-A1- 1 852 402
- WO-A-00/76930
- WO-A-01/27050
- WO-A-03/074442
- WO-A-2004/071984
- WO-A1-00/37383
- WO-A1-2005/115940
- WO-A1-2006/048463
- WO-A2-2006/048462
- WO-A2-2006/066101
- US-A- 4 534 841
- US-A- 4 610 771
- US-A- 4 902 081
- US-A- 4 948 677
- US-A1- 2003 235 719
- US-B1- 6 495 251

## Description

L'invention se rapporte à une feuille de verre portant un empilage multicouche, déposé par pulvérisation cathodique sous pression réduite, comprenant au moins une couche fonctionnelle à base d'un matériau réfléchissant le rayonnement infrarouge et au moins deux revêtements diélectriques, chaque couche fonctionnelle étant entourée de revêtements diélectriques, qui est apte à subir ou qui a subi un traitement thermique à température élevée, tel qu'une opération de bombage, de recuit ou de trempe thermique. L'invention se rapporte également à un vitrage feuilleté et à un vitrage multiple comprenant une telle feuille de verre.

Les vitrages comprenant une feuille de verre portant un empilage multicouche dont il est fait référence dans la présente invention sont utilisés notamment pour améliorer l'isolation thermique des grandes surfaces vitrées et réduire ainsi les déperditions d'énergie et les coûts de chauffage en période froide. L'empilage multicouche est un revêtement à faible émissivité qui réduit la déperdition de chaleur par rayonnement infrarouge de grande longueur d'onde. On demande en général qu'il ait une transmission lumineuse (TL) très élevée.

Ces vitrages sont aussi utilisés en tant que protection solaire pour réduire le risque de surchauffe excessive, d'un espace clos ayant de grandes surfaces vitrées, dû à l'ensoleillement et ainsi réduire l'effort de climatisation à consentir en été. Dans ce cas, le vitrage doit laisser passer le moins possible de rayonnement solaire énergétique total, c'est-à-dire qu'il doit présenter un facteur solaire (FS) le plus faible possible. Il est cependant fortement souhaitable qu'il garantisse une transmission lumineuse (TL) aussi élevée que possible de manière à procurer un niveau d'éclairement suffisant à l'intérieur du bâtiment ou à l'intérieur du véhicule automobile. Ces exigences quelque peu conflictuelles traduisent la volonté d'obtenir un vitrage présentant une sélectivité (S) élevée, définie par le rapport de la transmission lumineuse au facteur solaire.

La transmission lumineuse (TL) est le pourcentage du flux lumineux incident, de l'Illuminant D65, transmis par le vitrage. Le facteur solaire (FS ou g) est le pourcentage du rayonnement énergétique incident qui est d'une part directement transmis par le vitrage et d'autre part absorbé par celui-ci puis rayonné par sa face opposée à la source d'énergie.

Pour l'utilisation dans les bâtiments, ils sont en général assemblés en vitrage double associés à une autre feuille de verre, dépourvue ou non de revêtement, le revêtement multicouche se trouvant à l'intérieur de l'espace entre les deux feuilles de verre. Lorsqu'ils sont utilisés dans le domaine automobile, ils sont généralement assemblés par feuilletage à une autre feuille de verre, dépourvue ou non de revêtement, à l'intervention d'un film thermoplastique tel que du PVB, le revêtement multicouche se trouvant entre les deux feuilles de verre.

Il est également souhaitable que les vitrages répondent à certains critères esthétiques en terme de réflexion lumineuse (RL), c'est-à-dire le pourcentage du flux lumineux incident -de illuminant D65- réfléchi par le vitrage, et de couleur en réflexion et en transmission. La combinaison d'une haute sélectivité avec une faible réflexion lumineuse conduit parfois à l'obtention de teintes pourpres en réflexion qui sont très peu esthétiques.

Dans le domaine du bâtiment, on est souvent amené à effectuer une opération de renforcement mécanique du vitrage, telle qu'une trempe thermique, pour améliorer sa résistance aux contraintes mécaniques. Dans le domaine de l'automobile, on est aussi souvent amené à bomber le vitrage pour être conforme aux caractéristiques du véhicule. Dans les processus de fabrication et de mise en forme des vitrages, il y a certains avantages à effectuer ces opérations de trempe et de bombage sur le substrat déjà revêtu au lieu de revêtir un substrat déjà mis en forme. Ces opérations sont réalisées à une température relativement élevée, température à laquelle la couche réfléchissant l'infrarouge, par exemple à base d'argent, à tendance à se détériorer et à perdre ses propriétés optiques et ses propriétés vis-à-vis du rayonnement infrarouge. Il faut donc prendre des précautions toutes particulières pour réaliser une structure de revêtement qui soit apte à subir un traitement thermique de trempe ou de bombage, souvent référencé ci-après par l'expression « bombable-trempable », sans perdre ses propriétés optiques et/ou énergétiques qui en font sa raison d'être, que ce soit pour des vitrages à protection solaire, pour des vitrages destinés à améliorer l'isolation thermique ou pour des vitrages qui ont pour rôle de réaliser en même temps ces deux fonctions thermiques.

Pour résoudre ce problème, on a proposé différentes solutions. Le brevet EP 275 474 B1 par exemple, propose d'utiliser des revêtements diélectriques sous forme d'oxydes métalliques obtenus par pulvérisation cathodique en atmosphère oxydante à partir de cibles de zinc-étain, et d'entourer la couche réfléchissant l'infrarouge à base d'argent par de minces couches métalliques de titane. La demande de brevet WO 01/27050 A1 propose d'utiliser des revêtements diélectriques formés d'au moins deux couches de composition différente dont l'une, disposée de manière spécifique dans l'empilage, est un mélange particulier d'oxyde de zinc avec un matériau additionnel. La demande de brevet WO 03/022770 A1 propose une structure du type Si₃N₄/NiCrNx/Ag/NiCr ou NiCrNx/Si₃N₄ avec des revêtements diélectriques constitués par du nitrure de silicium.

Ces propositions donnent des résultats acceptables, mais la qualité des couches obtenues peut encore être améliorée sous certains aspects, notamment en ce qui concerne la durabilité chimique et/ou la résistance au traitement thermique à très haute température et l'émissivité.

L'invention se rapporte à une feuille de verre portant un empilage multicouche selon la revendication 1.

On a découvert qu'un empilage contenant en combinaison un oxyde mixte zinc-étain contenant au moins 20% d'étain avec des couches-barrières à la diffusion de l'oxygène, selon les conditions spécifiées dans la revendication 1, apporte certains avantages en termes de durabilité chimique ou de résistance au traitement thermique par rapport aux empilages connus précédemment, en fonction de la disposition des différentes couches dans l'empilage comme expliqué ci-après. Il est surprenant qu'une telle association apporte des avantages spécifiques.

Les expressions similaires à « oxyde mixte zinc-étain contenant au moins 20% d'étain » utilisées dans la présente description signifie qu'il y a au moins 20% en poids d'étain dans l'oxyde mixte zinc-étain par rapport au poids total de zinc et d'étain dans l'oxyde mixte. Il en est de même pour les pourcentages de zinc dans l'oxyde mixte donnés ci-après, ainsi que pour d'autres valeurs que 20% qui est pris ici à titre d'illustration. Un moyen commode de former l'oxyde mixte zinc-étain, dont il est fait référence dans la présente description, est d'utiliser une cathode d'un alliage métallique zinc-étain de la composition adéquate pour effectuer une pulvérisation cathodique assistée par champ magnétique, de type magnétron, à pression réduite en atmosphère réactive constituées d'un mélange oxygène-argon.

De préférence, la couche-barrière à la diffusion de l'oxygène a une épaisseur physique comprise entre 5 et 100 nm, avantageusement entre 12 et 80 nm, et dans certaines applications, elle est comprise entre 12 et 50 nm. Ces gammes d'épaisseurs permettent de réaliser une barrière efficace à la diffusion d'oxygène tout en constituant un diélectrique anti-réfléchissant particulièrement utile dans l'effet d'interférence global.

De préférence, la couche à base d'un oxyde mixte zinc-étain contenant au moins 20% d'étain a une épaisseur physique comprise entre 10 et 100 nm, avantageusement entre 20 et 85 nm. Sous cette épaisseur cet oxyde mixte zinc-étain joue non seulement un rôle favorable dans l'effet interférentiel, mais il semble jouer aussi un rôle particulièrement efficace dans la résistance thermique du revêtement lorsque celui-ci subit un traitement thermique à température élevée, ainsi que dans la résistance du revêtement aux agressions chimiques.

Avantageusement, une couche à base de ZnO est disposée sous, et en contact direct avec, la ou au moins une couche fonctionnelle, et de préférence au contact de chaque couche fonctionnelle. Une couche à base de ZnO, même de faible épaisseur, sous la couche fonctionnelle améliore significativement la résistance à l'oxydation et à la dégradation chimique de la couche fonctionnelle, surtout lorsque celle-ci est à base d'argent.

De préférence, au moins une couche fonctionnelle est déposée sur, et en contact direct avec, une couche à base d'oxyde ou de sous-oxyde comprenant de 80 à 99% de zinc et de 1 à 20% d'un autre matériau choisi parmi Mg, Si, Ti, Zr, Hf, Nb, Ta, Cr, Mo, W, Al, Ga, In et Bi, faisant partie du revêtement diélectrique disposé sous la couche fonctionnelle. On a découvert qu'en appliquant cette caractéristique, indépendamment de la disposition de la ou des couches à base d'oxyde mixte d'alliage zinc-étain contenant au moins 20% d'étain et de la ou des couches-barrières, on améliore nettement les propriétés de la couche fonctionnelle à base d'un matériau réfléchissant le rayonnement infrarouge dans le produit fini, et notamment après traitement thermique. La présence d'une teneur élevée en zinc, mais inférieure à 100%, en contact avec le matériau réfléchissant l'infrarouge, particulièrement lorsqu'il s'agit d'un matériau à base d'argent, semble être un élément déterminant pour que ce matériau résiste mieux aux agressions chimiques et présente une structure plus adéquate à la réflexion du rayonnement infrarouge, tant solaire (proche infrarouge) que l'infrarouge de grandes longueurs d'onde (infrarouge lointain). Cet avantage est plus net pour l'ensemble de l'empilage si chaque couche fonctionnelle est disposée de cette façon.

De préférence, le revêtement diélectrique (ci-après dénommé « diélectrique inférieur ») disposé entre le substrat et la couche fonctionnelle ou la première couche fonctionnelle s'il y en a plusieurs, comprend au moins une couche à base d'un oxyde mixte zinc-étain contenant au moins 20% d'étain. On a constaté que cette disposition rend l'empilage moins sensible à l'état de surface du verre et à la diffusion d'éléments à partir de la surface du verre. Un avantage particulièrement intéressant de cette disposition est que les propriétés et la qualité de l'empilage ne dépend pratiquement plus du fait que la feuille de verre de base vient juste d'être fabriquée ou qu'elle a été stockée pendant une longue période, par exemple plusieurs mois, avant son introduction dans le dispositif de dépôt de couches. La couche à base d'un oxyde mixte zinc-étain contenant au moins 20% d'étain ne doit pas nécessairement être au contact direct du substrat pour obtenir ce résultat avantageux. Une sous-couche, formée par exemple de TiO₂, ZnO, SiO₂, Al₂O₃, AlN ou SnO₂, leur mélange ou tout diélectrique adéquat, peut être insérée entre le substrat et la dite couche. On a constaté toutefois que le meilleur résultat peut être obtenu lorsque la dite couche à base d'un oxyde mixte zinc-étain contenant au moins 20% d'étain est déposée directement sur le substrat.

Le revêtement diélectrique (ci-après dénommé « diélectrique supérieur ») disposé au-dessus de la couche fonctionnelle ou de la dernière couche fonctionnelle s'il y en a plusieurs, comprend au moins une dite couche-barrière à la diffusion de l'oxygène. Avec cette disposition, on constate que les propriétés optiques et énergétiques sont plus stables pendant le traitement thermique. En particulier, la teinte en réflexion évolue moins au cours d'un traitement de trempe ou de bombage. Ce qui permet, notamment, d'obtenir plus aisément des vitrages après trempe qui peuvent être associés avec des vitrages non trempés ayant la même structure, sans différence significative du point de vue esthétique.

Avantageusement, en plus de la couche-barrière à la diffusion de l'oxygène, le diélectrique supérieur comprend au moins une couche à base d'un oxyde mixte zinc-étain, contenant au moins 20% d'étain, déposée sous la couche-barrière du diélectrique supérieur. Ceci améliore la résistance chimique de l'empilage surtout lorsque le vitrage revêtu est entreposé dans des conditions critiques en ce qui concerne les agressions chimiques, la durabilité chimique du vitrage est prolongée. Il devient ainsi possible de tremper une feuille de verre portant un empilage qui est resté entreposé un certain temps depuis le dépôt de l'empilage, ce qui autrement est un risque d'apparition de défauts au cours de l'opération de trempe. Avantageusement, en plus de cette disposition spécifique, le diélectrique inférieur comprend au moins une couche à base d'un oxyde mixte zinc-étain contenant au moins 20% d'étain. On constate ainsi que l'empilage est, de plus, peu sensible à l'état de surface du verre.

De préférence, l'empilage multicouche comprend au moins deux couches fonctionnelles à base d'un matériau réfléchissant le rayonnement infrarouge et en ce que le ou au moins un revêtement diélectrique (ci-après dénommé « diélectrique intermédiaire ») disposé entre deux couches fonctionnelles comprend au moins une couche à base d'un oxyde mixte zinc-étain, contenant au moins 20% d'étain. On obtient ainsi aisément des vitrages anti-solaires performants à haute sélectivité et à haute résistance au traitement thermique ayant une bonne stabilité structurelle. Il semble en effet qu'un diélectrique intermédiaire comprenant une telle couche à base d'un oxyde mixte zinc-étain limite les inter-diffusions dans l'empilage.

De préférence, la ou les couches fonctionnelles à base d'un matériau réfléchissant le rayonnement infrarouge sont à base d'argent ou d'un alliage d'argent. L'argent est un matériau bien adapté pour former par pulvérisation cathodique une couche réfléchissant le rayonnement infrarouge et il est moins onéreux que l'or. L'argent peut être dopé avec une petite quantité d'un autre métal noble tel que du palladium, du platine ou le rhodium. Il peut aussi être sous forme d'un alliage avec un autre métal tel que l'aluminium ou le cuivre par exemple.

De préférence, chaque couche fonctionnelle à base d'argent est surmontée d'au moins une couche de protection choisie parmi un ou plusieurs des matériaux suivants : Ti, TiOx, NiCr, NiCrOx, Nb, Ta, Al, Zr ou ZnAl. Les couches de protection sont destinées à protéger les couches à base d'argent, notamment pendant le traitement thermique, mais aussi en cours de dépôt des couches diélectriques supérieures, surtout si celles-ci sont formées dans une atmosphère contenant de l'oxygène qui risquerait d'oxyder l'argent ou dans une atmosphère contenant de l'azote. On les appelle parfois aussi couches sacrificielles parce qu'elles s'oxydent à la place de l'argent, et de ce fait elles deviennent elles-mêmes plus transparentes Par exemple, une couche de protection en Ti formera du TiO₂ lors du dépôt d'un diélectrique en atmosphère oxydante au-dessus de la couche de protection. Une couche TiOx peut, par exemple, être déposée à partir d'une cible céramique de TiOx en atmosphère neutre d'argon. Elle pourra aussi être oxydée plus complètement par le plasma utilisé pour le dépôt de la couche suivante, s'il s'agit d'une couche déposée en atmosphère oxydante.

De préférence, la ou les couche(s)-barrière(s) à la diffusion de l'oxygène est ou sont à base de Si₃N₄, SiOxNy, AlN ou de AlOxNy. Ces matériaux forment d'excellentes barrières à la diffusion de l'oxygène et améliorent significativement la résistance thermique du revêtement. De plus, lorsqu'ils sont disposés dans le diélectrique supérieur, ils réduisent d'autant la quantité d'oxyde présent dans l'empilage au-dessus de la ou des couches fonctionnelles, ce qui réduit l'évolution des propriétés de l'empilage au cours du traitement thermique. On peut dès lors revêtir des feuilles de verre d'épaisseurs différentes et obtenir les mêmes propriétés sans modifier la structure de l'empilage, en particulier sans devoir ajuster l'épaisseur des couches de protection si elles sont présentes.

L'invention s'étend à une feuille de verre trempé et/ou bombé formée d'une feuille de verre portant un empilage multicouche, telle que définie ci-dessus, qui a subi un traitement thermique de trempe et/ou de bombage après dépôt de l'empilage sur le verre.

L'invention s'étend également à un vitrage feuilleté comprenant au moins une feuille de verre telle que définie ci-dessus assemblée à au moins une autre feuille de verre à l'intervention d'un film de PVB, convenant particulièrement bien au domaine des vitrages pour l'industrie automobile, ainsi qu'à un vitrage multiple comprenant au moins une feuille de verre telle que définie ci-dessus maintenue espacée de manière hermétique d'au moins une autre feuille de verre par un intercalaire fixé à la périphérie entre les feuilles de verre.

L'invention sera maintenant décrite plus en détail, de manière non limitative, à l'aide des exemples de réalisations préférées ci-après.

### Exemples :

### Exemple 1 de comparaison.

Une feuille de verre float clair sodo-calcique ordinaire de 2 m sur 1 m et de 4 mm d'épaisseur est placée dans un dispositif de pulvérisation cathodique, assisté d'un champ magnétique, à pression réduite (environ 0,3 Pa) du type magnétron. Sur cette feuille de verre, on dépose un empilage multicouche ayant la structure suivante à partir du verre :
- Un revêtement diélectrique inférieur constitué de deux couches :
   o 26 nm ZnSnOx formé en atmosphère oxydante, constituée d'un mélange d'argon et d'oxygène, à partir d'une cathode d'un alliage zinc-étain à 52% de zinc et 48% d'étain, en vue d'obtenir du stannate de zinc ZnSnO₄ sur le verre ;
      o 10 nm ZnAlOx formé dans la même atmosphère oxydante à partir d'une cathode zinc-aluminium à 90% de zinc et 10% d'aluminium ;
- Une couche fonctionnelle formée de 13 nm d'Ag déposé dans une atmosphère neutre constituée essentiellement d'argon ;
- Une couche de protection formée de 5 nm de NiCrOx déposé dans en atmosphère réactive dans un mélange Ar/O₂ à partir d'une cible NiCr;
- Un revêtement diélectrique supérieur constitué d'une couche-barrière à la diffusion de l'oxygène formée de 37 nm de Si₃N₄ déposé en atmosphère réactive à partir d'une cible de silicium légèrement dopé avec de l'aluminium pour le rendre suffisamment conducteur pour la pulvérisation cathodique. L'atmosphère réactive est formée d'un mélange d'azote et d'argon, par exemple entre 10 et 20% d'Ar et 90-80% d'azote, de manière à obtenir un diélectrique Si₃N₄ n'ayant qu'une très faible absorption lumineuse du même ordre de grandeur que les oxydes métalliques tels que ZnO ou SnO₂.

Les propriétés avant traitement de trempe thermique de la feuille de verre revêtue sont les suivantes :
TL= 81,1% ; ε (émissivité normale)= 0,065; Rs = 6,0 Ω/carré ;
la teinte en réflexion côté couche est exprimée par les valeurs suivantes :
L*= 24,2 ; a*= -0,4 ; b*=-13,2.

Dans la présente invention, la transmission lumineuse (TL) est mesurée avec l'Illuminant D65/2°. La teinte en réflexion est exprimée par les valeurs CIELAB 1976 (L*a*b*) mesurée avec l'Illuminant D65/10°. L'émissivité d'une surface donnée à une température donnée est définie comme étant le ratio de l'énergie émise par la surface par rapport à l'émetteur parfait (corps noir : émissivité = 1) à la même température. Pour les vitrages, l'émissivité est souvent mesurée à 25°C sur la face revêtue de la feuille de verre. Rs est la résistance spécifique exprimée en ohm par carré (par unité de surface carrée).

La feuille de verre ainsi revêtue subit ensuite une opération de trempe thermique au cours de laquelle elle est soumise pendant 4 minutes à une température de 690°C puis refroidie brutalement par des jets d'air froid.

Les propriétés après traitement de trempe thermique de la feuille de verre revêtue sont les suivantes :
TL= 84,3% ; E (émissivité normale )= 0,040; Rs = 3,6 Ω/carré;
la teinte en réflexion côté couche est exprimée par les valeurs suivantes :
L*= 25,8 ; a*= -1,2 ; b*=-13,1.

### Exemple 2 de comparaison.

Sur une feuille de verre identique à l'exemple 1, on dépose, de la même manière que dans l'exemple 1, un empilage multicouche ayant la structure suivante à partir du verre :
- Un revêtement diélectrique inférieur constitué de deux couches :
   o 26 nm ZnSnOx formé en atmosphère oxydante, constituée d'un mélange d'argon et d'oxygène, à partir d'une cathode d'un alliage zinc-étain à 52% de zinc et 48% d'étain ;
   o 8 nm ZnAlOx formé dans la même atmosphère oxydante à partir d'une cathode d'un alliage zinc-aluminium à 90% de zinc et 10% d'aluminium ;
- Une couche fonctionnelle formée de 11 nm d'Ag déposé dans une atmosphère neutre constituée essentiellement d'argon ;
- Une couche de protection formée de 6 nm de Ti déposé dans la même atmosphère neutre à partir d'une cible de titane, cette couche sera partiellement oxydée par le dépôt suivant qui se fait en atmosphère oxydante ;
- Un revêtement diélectrique supérieur constitué de deux couches :
   o 25 nm ZnSnOx formé en atmosphère oxydante, constituée d'un mélange d'argon et d'oxygène, à partir d'une cathode d'un alliage zinc-étain à 52% de zinc et 48% d'étain ;
   o Une couche-barrière à la diffusion de l'oxygène formée de 17 nm de Si₃N₄ déposé en atmosphère réactive d'azote, formée d'un mélange d'azote et d'argon comme dans l'exemple 1, à partir d'une cible de silicium légèrement dopé avec de l'aluminium pour le rendre suffisamment conducteur pour la pulvérisation cathodique;

Après 24h. de séjour dans une enceinte contenant un brouillard salin, selon la norme ISO9227 appliquée aux verres à couches, il n'y a pas de piqûre et donc pas de dégradation de la couche à base d'argent.

Les propriétés avant traitement de trempe thermique de la feuille de verre revêtue sont les suivantes :
TL= 76,9% ; ε (émissivité)= 0,075; Rs = 6,2 Ω/carré ;
la teinte en réflexion côté couche est exprimée par les valeurs suivantes :
L*= 25,3 ; a*= -0,9 ; b*=-16,6.

La feuille de verre ainsi revêtue est stockée dans un endroit humide pendant plusieurs semaines avant de subir ensuite une opération de trempe thermique au cours de laquelle elle est soumise pendant 4 minutes à une température de 690°C puis refroidie brutalement par des jets d'air froid.

Les propriétés après traitement de trempe thermique de la feuille de verre revêtue sont les suivantes :
TL= 86,1% ; ε (émissivité)= 0,050; Rs = 4,2 Ω/carré ;
la teinte en réflexion côté couche est exprimée par les valeurs suivantes :
L*= 33,5 ; a*= -3,8 ; b*=-14,1.

On constate que le séjour prolongé en atmosphère humide n'a pas entamé l'aptitude de la feuille de verre revêtue à être trempée, car le produit final présente des propriétés excellentes montrant que la couche fonctionnelle n'a pas été détériorée.

### Exemple 3 selon l'invention.

Sur une feuille de verre identique à l'exemple 1, on dépose, de la même manière que dans l'exemple 1, un empilage multicouche ayant la structure suivante à partir du verre :
- Un revêtement diélectrique inférieur constitué de deux couches :
   o 16 nm AlN formé en atmosphère d'azote (80% Ar et 20% N₂) à partir d'une cathode d'aluminium ;
   o 12 nm ZnAlOx formé dans la même atmosphère oxydante à partir d'une cathode zinc-aluminium à 90% de zinc et 10% d'aluminium ;
- Une couche fonctionnelle formée de 12 nm d'Ag déposé dans une atmosphère neutre constituée essentiellement d'argon ;
- Une couche de protection formée de 7 nm de Ti déposé dans la même atmosphère neutre à partir d'une cible de titane, cette couche sera partiellement oxydée par le dépôt suivant qui se fait en atmosphère oxydante ;
- Un revêtement diélectrique supérieur constitué de deux couches :
   o 30 nm ZnSnOx formé en atmosphère oxydante, constituée d'un mélange d'argon et d'oxygène, à partir d'une cathode zinc-étain à 52% de zinc et 48% d'étain ;
   o Une couche-barrière à la diffusion de l'oxygène formée de 10 nm de Si₃N₄ déposé en atmosphère réactive d'azote, formée d'un mélange d'azote et d'argon comme dans l'exemple 1, à partir d'une cible de silicium légèrement dopé avec de l'aluminium pour le rendre suffisamment conducteur pour la pulvérisation cathodique ;

Les propriétés avant traitement de trempe thermique de la feuille de verre revêtue sont les suivantes :
TL= 68,9%; ε (émissivité)= 0,068; Rs = 5,8 Ω/carré ;
la teinte en réflexion côte couche est exprimée par les valeurs suivantes :
L*= 22,5 ; a*= +4,0 ; b*=-19,4.

La feuille de verre ainsi revêtue subit ensuite une opération de trempe thermique au cours de laquelle elle est soumise pendant 4 minutes à une température de 690°C puis refroidie brutalement par des jets d'air froid.

Les propriétés après traitement de trempe thermique de la feuille de verre revêtue sont les suivantes :
TL= 85% ; ε (émissivité)= 0,044; Rs = 3,8 Ω/carré ;
la teinte en réflexion côté couche est exprimée par les valeurs suivantes :
L*=34,1 ; a*=-4,0 ; b*=-16,7.

### Exemple 4 selon l'invention.

Sur une feuille de verre identique à l'exemple 1, on dépose, de la même manière que dans l'exemple 1, un empilage multicouche ayant la structure suivante à partir du verre :
o Un revêtement diélectrique inférieur constitué de trois couches :
   o 12 nm AlN formé en atmosphère d'azote (80% Ar et 20% N₂) à partir d'une cathode d'aluminium ;
   o 12 nm ZnSnOx formé en atmosphère oxydante, constituée d'un mélange d'argon et d'oxygène, à partir d'une cathode d'un alliage zinc-étain à 52% de zinc et 48% d'étain ;
   o 10 nm ZnTiOx formé dans la même atmosphère oxydante par copulvérisation DC à partir de deux cathodes rotatives, une cathode de zinc et une cathode de titane, pour obtenir un oxyde mixte contenant 15% en poids d'oxyde de titane ;
o Une couche fonctionnelle formée de 11 nm d'Ag déposé dans une atmosphère neutre constituée essentiellement d'argon ;
• Une couche de protection formée de 5 nm de Ti déposé dans la même atmosphère neutre à partir d'une cible de titane, cette couche sera partiellement oxydée par le dépôt suivant qui se fait en atmosphère oxydante ;
• Un revêtement diélectrique intermédiaire constitué de deux couches :
   o 75 nm ZnSnOx formé en atmosphère oxydante, constituée d'un mélange d'argon et d'oxygène, à partir d'une cathode zinc-étain à 52% de zinc et 48% d'étain ;
   o 10 nm ZnTiOx formé dans la même atmosphère oxydante par copulvérisation DC à partir de deux cathodes rotatives, une cathode de zinc et une cathode de titane, pour obtenir un oxyde mixte contenant 15% en poids d'oxyde de titane ;
• Une couche fonctionnelle formée de 15 nm d'Ag déposé dans une atmosphère neutre constituée essentiellement d'argon ;
• Une couche de protection formée de 5 nm de Ti déposé dans la même atmosphère neutre à partir d'une cible de titane, cette couche sera partiellement oxydée par le dépôt suivant qui se fait en atmosphère oxydante ;
• Un revêtement diélectrique supérieur constitué de deux couches :
   o 12 nm ZnSnOx formé en atmosphère oxydante, constituée d'un mélange d'argon et d'oxygène, à partir d'une cathode zinc-étain à 52% de zinc et 48% d'étain ;
   o Une couche-barrière à la diffusion de l'oxygène formée de 17 nm de Si₃N₄ déposé en atmosphère réactive d'azote, formée d'un mélange d'azote et d'argon comme dans l'exemple 1, à partir d'une cible de silicium légèrement dopé avec de l'aluminium pour le rendre suffisamment conducteur pour la pulvérisation cathodique ;

Les propriétés avant traitement de trempe thermique de la feuille de verre revêtue sont les suivantes :
TL= 52,2% ; ε (émissivité)= 0,028; Rs = 2,7 Ω/carré ;
la teinte en réflexion côté verre est exprimée par les valeurs suivantes :
L*=38,3 ; a*=-3,2 ; b*=-14,2.

La feuille de verre ainsi revêtue subit ensuite une opération de trempe thermique au cours de laquelle elle est soumise pendant 4 minutes à une température de 690°C puis refroidie brutalement par des jets d'air froid.

Les propriétés après traitement de trempe thermique de la feuille de verre revêtue sont les suivantes :
TL= 82,4% ; ε (émissivité)= 0,022; Rs = 2,0 Ω/carré ;
la teinte en réflexion côté couche est exprimée par les valeurs suivantes :
L*= 34,7 ; a*= -0,1 ; b*=+0,9.

## Revendications

1. Feuille de verre portant un empilage multicouche comprenant au moins une couche fonctionnelle à base d'un matériau réfléchissant le rayonnement infrarouge et au moins deux revêtements diélectriques, chaque couche fonctionnelle étant entourée de revêtements diélectriques, **caractérisée en ce que** l'ensemble des revêtements diélectriques comprend au moins une couche à base d'un oxyde mixte zinc-étain contenant au moins 20% d'étain, **en ce que** le revêtement diélectrique (ci-après dénommé « diélectrique supérieur ») disposé au-dessus de la couche fonctionnelle ou de la dernière couche fonctionnelle s'il y en a plusieurs, inclut au moins une couche-barrière à la diffusion de l'oxygène de plus de 5 nm d'épaisseur choisie parmi les matériaux suivants : AIN, AlNxOy, Si₃N₄, SiOxNy, ZrN, SiC, SiOxCy, TaC, TiN, TiNxOy,TiC, CrC, DLC et des nitrures ou oxynitrures d'alliages tels que SiAlOxNy ou SiTixNy et **en ce que** un autre revêtement diélectrique inclut au moins une couche-barrière à la diffusion de l'oxygène base de Si₃N₄, SiOxNy, AIN ou de AlOxNy.

2. Feuille de verre selon la revendication 1, **caractérisée en ce que** la couche-barrière à la diffusion de l'oxygène a une épaisseur physique comprise entre 5 et 100 nm, de préférence entre 12 et 80 nm.

3. Feuille de verre selon la revendication 2, **caractérisée en ce que** la couche-barrière à la diffusion de l'oxygène a une épaisseur physique comprise entre 12 et 50 nm.

4. Feuille de verre selon l'une des revendications 1 à 3, **caractérisée en ce que** la couche à base d'un oxyde mixte zinc-étain contenant au moins 20% d'étain a une épaisseur physique comprise entre 10 et 100 nm, de préférence entre 20 et 85 nm.

5. Feuille de verre selon l'une des revendications 1 à 4, **caractérisée en ce qu'**au moins une couche fonctionnelle est déposée sur, et en contact direct avec, une couche à base d'oxyde ou de sous-oxyde comprenant de 80 à 99% de zinc et de 1 à 20% d'un autre matériau choisi parmi Mg, Si, Ti, Zr, Hf, Nb, Ta, Cr, Mo, W, Al, Ga, In et Bi, faisant partie du revêtement diélectrique disposé sous la couche fonctionnelle.

6. Feuille de verre selon la revendication 5, **caractérisée en ce que** l'empilage comprend plusieurs couches fonctionnelles et chaque couche fonctionnelle est déposée sur, et en contact direct avec, une couche à base d'oxyde ou de sous-oxyde comprenant de 80 à 99% de zinc et de 1 à 20% d'un autre matériau choisi parmi Mg, Si, Ti, Zr, Hf, Nb, Ta, Cr, Mo, W, Al, Ga, In et Bi.

7. Feuille de verre selon l'une des revendications 1 à 6, **caractérisé en ce que** le revêtement diélectrique inférieur disposé entre le substrat et la couche fonctionelle ou la première couche fonctionelle s'il y en a plusieurs, comprend au moins une couche à base d'un oxyde mixte zinc-étain contenant au moins 20% d'étain.

8. Feuille de verre selon l'une des revendications 1 à 7, **caractérisée en ce que** le revêtement diélectrique supérieur comprend au moins une couche à base d'un oxyde mixte zinc-étain, contenant au moins 20% d'étain, déposée sous la couche-barrière du revêtement diélectrique supérieur.

9. Feuille de verre selon l'une des revendications 1 à 8, **caractérisée en ce que** l'empilage multicouche comprend au moins deux couches fonctionnelles à base d'un matériau réfléchissant le rayonnement infrarouge et **en ce que** le ou au moins un revêtement diélectrique (ci-après dénommé « diélectrique intermédiaire ») disposé entre deux couches fonctionnelles comprend au moins une couche à base d'un oxyde mixte zinc-étain, contenant au moins 20% d'étain.

10. Feuille de verre selon l'une des revendications 1 à 9, **caractérisée en ce que** la ou les couches fonctionnelles à base d'un matériau réfléchissant le rayonnement infrarouge sont à base d'argent ou d'un alliage d'argent.

11. Feuille de verre selon la revendication 10, **caractérisée en ce que** chaque couche fonctionnelle à base d'argent est surmontée d'au moins une couche de protection choisie parmi un ou plusieurs des matériaux suivants : Ti, TiOx, NiCr, NiCrOx, Nb, Ta, Al, Zr ou ZnAl.

12. Feuille de verre selon l'une des revendications 1 à 11, **caractérisée en ce que** la couche-barrière à la diffusion de l'oxygène incluse dans le revêtement diélectrique supérieur est à base de Si₃N₄, SiOxNy, AIN ou de AlOxNy.

13. Feuille de verre trempé et/ou bombé formée d'une feuille de verre portant un empilage multicouche selon l'une des revendications 1 à 12 qui a subi un traitement thermique de trempe et/ou de bombage après dépôt de l'empilage.

14. Vitrage feuilleté comprenant au moins une feuille de verre selon l'une des revendications 1 à 13 assemblée à au moins une autre feuille de verre à l'intervention d'un film de PVB.

15. Vitrage multiple comprenant au moins une feuille de verre selon l'une des revendications 1 à 13 maintenue espacée de manière hermétique d'au moins une autre feuille de verre par un intercalaire fixé à la périphérie entre les feuilles de verre.

## Claims

1. Glass sheet bearing a multilayer stack comprising at least one functional layer based on a material that reflects infrared radiation and at least two dielectric coatings, such that each functional layer is surrounded by dielectric coatings, **characterised in that** the assembly of the dielectric coatings includes at least one layer based on a mixed zinc-tin oxide containing at least 20% tin, **in that** the dielectric coating (hereafter referred to as "upper dielectric") disposed above the functional layer, or the last functional layer if there are several thereof, comprises at least one oxygen diffusion barrier layer with a thickness of more than 5nm selected from the following materials: AlN, AlNxOy, Si₃N₄, SiOxNy, ZrN, SiC, SiOxCy, TaC, TiN, TiNxOy, TiC, CrC, DLC and nitrides or oxynitrides of alloys such as SiAlOxNy or SiTixNy, and **in that** another dielectric coating comprises at least one oxygen diffusion barrier layer based on Si₃N₄, SiOxNy, AlN or AlOxNy.

2. Glass sheet according to Claim 1, **characterised in that** the oxygen diffusion barrier layer has a physical thickness of between 5 and 100 nm, preferably between 12 and 80 nm.

3. Glass sheet according to Claim 2, **characterised in that** the oxygen diffusion barrier layer has a physical thickness of between 12 and 50 nm.

4. Glass sheet according to one of Claims 1 to 3, **characterised in that** the layer based on a mixed zinc-tin oxide containing at least 20% tin has a physical thickness of between 10 and 100 nm, preferably between 20 and 85 nm.

5. Glass sheet according to one of Claims 1 to 4, **characterised in that** at least one functional layer is deposited on and in direct contact with a layer based on mixed zinc-tin oxide or sub-oxide containing 80 to 99% zinc and 1 to 20% of another material selected from Mg, Si, Ti, Zr, Hf, Nb, Ta, Cr, Mo, W, Al, Ga, In and Bi, forming part of the dielectric coating disposed beneath the functional layer.

6. Glass sheet according to Claim 5, **characterised in that** the stack comprises several functional layers and each functional layer is deposited on and in direct contact with a layer based on oxide or sub-oxide containing 80 to 99% zinc and 1 to 20% of another material selected from Mg, Si, Ti, Zr, Hf, Nb, Ta, Cr, Mo, W, Al, Ga, In and Bi.

7. Glass sheet according to one of Claims 1 to 6, **characterised in that** the lower dielectric coating, disposed between the substrate and the functional layer, or the first functional layer if there are several thereof, comprises at least one layer based on a mixed zinc-tin oxide containing at least 20% tin.

8. Glass sheet according to one of Claims 1 to 7, **characterised in that** the upper dielectric comprises at least one layer based on a mixed zinc-tin oxide containing at least 20% tin deposited beneath the barrier layer of the upper dielectric coating.

9. Glass sheet according to one of Claims 1 to 8, **characterised in that** the multilayer stack comprises at least two functional layers based on a material reflecting infrared radiation, and that the or at least one dielectric coating (hereafter referred to as "intermediate dielectric") disposed between two functional layers comprises at least one layer based on a mixed zinc-tin oxide containing at least 20% tin.

10. Glass sheet according to one of Claims 1 to 9, **characterised in that** the functional layer or layers based on a material reflecting infrared radiation are silver-based or silver alloy-based.

11. Glass sheet according to Claim 10, **characterised in that** each silver-based functional layer is covered by at least one protective layer selected from one or more of the following materials: Ti, TiOx, NiCr, NiCrOx, Nb, Ta, Al, Zr or ZnAl.

12. Glass sheet according to one of Claims 1 to 11, **characterised in that** the oxygen diffusion barrier layer included in the upper dielectric coating is based on Si₃N₄, SiOxNy, AlN or AlOxNy.

13. Toughened and/or bent glass sheet formed from a glass sheet bearing a multilayer stack according to one of Claims 1 to 12, which has undergone a thermal toughening and/or bending treatment after deposition of the stack.

14. Laminated glazing comprising at least one glass sheet according to one of Claims 1 to 13, assembled on at least one other glass sheet with a film of PVB interposed.

15. Multiple glazing comprising at least one glass sheet according to one of Claims 1 to 13, that is hermetically spaced from at least one other glass sheet by means of a spacer secured at the periphery between the glass sheets.

## Patentansprüche

1. Glasscheibe, die eine mehrlagige Aufeinanderschichtung aufweist, welche mindestens eine Funktionslage auf Grundlage eines Werkstoffs, der die Infrarotstrahlung reflektiert, und mindestens zwei dielektrische Beschichtungen umfasst, wobei jede Funktionslage von dielektrischen Beschichtungen umgeben ist, **dadurch gekennzeichnet, dass** die Gesamtheit der dielektrischen Beschichtungen mindestens eine Lage auf Grundlage eines Zink-Zinn-Mischoxids umfasst, welches mindestens 20 % Zinn enthält, dass die dielektrische (nachstehend als "obere dielektrische" bezeichnete) Beschichtung, welche oberhalb der Funktionslage oder der letzten Funktionslage, wenn es mehrere davon gibt, angeordnet ist, mindestens eine Sperrlage von mindestens 5 nm Dicke gegen die Diffusion von Sauerstoff umfasst, welche aus den folgenden Werkstoffen ausgewählt ist: AlN, AlNxOy, Si₃N₄, SiOxNy, ZrN, SiC, SiOxCy, TaC, TiN, TiNxOy, TiC, CrC, DLC sowie Nitride oder Oxynitride von Legierungen wie etwa SiAlOxNy oder SiTixNy, und dass eine weitere dielektrische Beschichtung mindestens eine Sperrlage gegen die Diffusion von Sauerstoff umfasst, wobei diese auf Si₃N₄, SiOxNy, AlN oder AlOxNy beruht.

2. Glasscheibe nach Anspruch 1, **dadurch gekennzeichnet, dass** die Sperrlage gegen die Diffusion von Sauerstoff eine physikalische Dicke im Bereich von 5 bis 100 nm, vorzugsweise von 12 bis 80 nm, hat.

3. Glasscheibe nach Anspruch 2, **dadurch gekennzeichnet, dass** die Sperrlage gegen die Diffusion von Sauerstoff eine physikalische Dicke im Bereich von 12 bis 50 nm hat.

4. Glasscheibe nach einem der Ansprüche 1 bis 3, **dadurch gekennzeichnet, dass** die Lage auf Grundlage eines Zink-Zinn-Mischoxids, welches mindestens 20 % Zinn enthält, eine physikalische Dicke im Bereich von 10 bis 100 nm, vorzugsweise von 20 bis 85 nm, hat.

5. Glasscheibe nach einem der Ansprüche 1 bis 4, **dadurch gekennzeichnet, dass** mindestens eine Funktionslage auf eine Lage auf Grundlage von Oxid oder niederstufigeren Sauerstoffverbindungen aufgebracht und in direkte Berührung mit dieser gebracht wird, wobei letztere 80 bis 99 % Zink und 1 bis 20 % eines anderen Werkstoffs, welcher aus Mg, Si, Ti, Zr, Hf, Nb, Ta, Cr, Mo, W, Al, Ga, In und Bi ausgewählt ist, umfasst und Bestandteil der dielektrischen Beschichtung ist, welche unterhalb der Funktionslage angeordnet ist.

6. Glasscheibe nach Anspruch 5, **dadurch gekennzeichnet, dass** die Aufeinanderschichtung mehrere Funktionslagen umfasst und jede Funktionslage auf eine Lage auf Grundlage von Oxid oder niederstufigeren Sauerstoffverbindungen aufgebracht und in direkte Berührung mit dieser gebracht wird, wobei letztere 80 bis 99 % Zink und 1 bis 20 % eines anderen Werkstoffs, welcher aus Mg, Si, Ti, Zr, Hf, Nb, Ta, Cr, Mo, W, Al, Ga, In und Bi ausgewählt ist, umfasst.

7. Glasscheibe nach einem der Ansprüche 1 bis 6, **dadurch gekennzeichnet, dass** die untere dielektrische Beschichtung, die zwischen dem Substrat und der Funktionslage oder der ersten Funktionslage, wenn es mehrere davon gibt, angeordnet ist, mindestens eine Schicht auf Grundlage eines Zink-Zinn-Mischoxids umfasst, welches mindestens 20 % Zinn enthält.

8. Glasscheibe nach einem der Ansprüche 1 bis 7, **dadurch gekennzeichnet, dass** die obere dielektrische Beschichtung mindestens eine Lage auf Grundlage eines Zink-Zinn-Mischoxids umfasst, welches mindestens 20 % Zinn enthält, wobei sie unterhalb der Sperrlage der oberen dielektrischen Beschichtung aufgebracht wird.

9. Glasscheibe nach einem der Ansprüche 1 bis 8, **dadurch gekennzeichnet, dass** die mehrschichtige Aufeinanderschichtung mindestens zwei Funktionslagen auf Grundlage eines Werkstoffs umfasst, welcher die Infrarotstrahlung reflektiert, und dass die oder mindestens eine (nachstehend als "mittlere dielektrische" bezeichnete) dielektrische Beschichtung, die zwischen zwei Funktionslagen angeordnet ist, mindestens eine Lage auf Grundlage eines Zink-Zinn-Mischoxids umfasst, welches mindestens 20 % Zinn enthält.

10. Glasscheibe nach einem der Ansprüche 1 bis 9, **dadurch gekennzeichnet, dass** die Funktionslagen auf Grundlage eines Werkstoffs, welcher die Infrarotstrahlung reflektiert, auf Silber oder einer Silberlegierung beruhen.

11. Glasscheibe nach Anspruch 10, **dadurch gekennzeichnet, dass** jede der Funktionslagen auf Grundlage von Silber von mindestens einer Schutzschicht überzogen ist, die aus einem oder mehreren der folgenden Werkstoffe ausgewählt ist: Ti, TiOx, NiCr, NiCrOx, Nb, Ta, Al, Zr oder ZnAl.

12. Glasscheibe nach einem der Ansprüche 1 bis 11, **dadurch gekennzeichnet, dass** die Sperrlage gegen die Diffusion von Sauerstoff, welche in der oberen dielektrischen Beschichtung enthalten ist, auf Si₃N₄, SiOxNy, AlN oder AlOxNy beruht.

13. Scheibe aus vorgespanntem und/oder gewölbtem Glas, die aus einer Glasscheibe gebildet ist, welche eine mehrlagige Aufeinanderschichtung nach einem der Ansprüche 1 bis 12 trägt, wobei sie nach dem Aufbringen der Aufeinanderschichtung eine vorspannende Wärmebehandlung und/oder eine Wölbungsbehandlung erfahren hat.

14. Verbundglaselement, das mindestens eine Glasscheibe nach einem der Ansprüche 1 bis 13 umfasst, welche mit mindestens einer weiteren Glasscheibe unter Verwendung einer PVB-Folie zusammengefügt wurde.

15. Mehrfach-Glaselement, das mindestens eine Glasscheibe nach einem der Ansprüche 1 bis 13 umfasst, die mittels eines Abstandsstücks, das am Randbereich zwischen den Glasscheiben befestigt ist, auf hermetische Weise von mindestens einer weiteren Glasscheibe beabstandet gehalten wird.
